# EUROPÄISCHE PATENTSCHRIFT

(11) **EP 0 868 253 B1**
(45) Veröffentlichungstag und Bekanntmachung des Hinweises auf die Patenterteilung: **12.09.2001**
(21) Anmeldenummer: 96946155.7
(22) Anmeldetag: 22.11.1996
(51) Int. Cl.: B23P 6/04

(54) **VERFAHREN ZUR RISSBESEITIGUNG BEI EINEM METALLISCHEN BAUTEIL, INSBESONDERE EINER TURBINENSCHAUFEL, SOWIE TURBINENSCHAUFEL**
METHOD OF REPAIRING CRACKS IN A METAL COMPONENT, IN PARTICULAR A TURBINE BLADE, AND TURBINE BLADES
PROCEDE D'ELIMINATION DE FISSURES DANS UN ELEMENT CONSTITUTIF METALLIQUE, NOTAMMENT UNE AUBE DE TURBINE, ET AUBE DE TURBINE

(30) Priorität: 08.12.1995 DE 19545963
(43) Veröffentlichungstag der Anmeldung: 07.10.1998
(73) Patentinhaber: SIEMENS AKTIENGESELLSCHAFT, 80333 München (DE)
(72) Erfinder: PAN, Ying, D-45472 Mülheim an der Ruhr (DE); HALBERSTADT, Knut, D-45468 Mülheim an der Ruhr (DE)
(86) Internationale Anmeldenummer: DE9602247
(87) Internationale Veröffentlichungsnummer: WO9721516

(56) Entgegenhaltungen:
- EP-A- 0 676 259
- US-A- 4 285 459
- US-A- 5 280 849

## Beschreibung

Die Erfindung betrifft ein Verfahren zur Rißbeseitigung bei einem metallischen Bauteil, insbesondere einer Turbinenschaufel, sowie ein Bauteil, insbesondere eine Turbinen- oder Verdichterschaufel einer Gas- oder Dampfturbine (siehe EP-A-676 259).

Ein metallisches Bauteil, welches über einen längeren Zeitraum thermomechanischen sowie dynamischen Belastungen ausgesetzt ist, kann aufgrund solcher Belastungen insbesondere an seiner Oberfläche reißen. Ein durch ein solches Reißen entstehender Riß birgt bei einem ungehinderten Ausbreiten die Gefahr eines Versagens des Bauteils.

Aus der EP-A-676 259 ist ein Verfahren bekannt, bei dem Fehlstellen durch kugelförmiges Ablagen und Ausfüllen mit kugelförmigen Reparaturkörpern ausgebessert werden.

In der DE 28 10 598 B2 ist ein Verfahren zum Reparieren eines schmalen Risses in der Oberfläche eines Gegenstandes aus einer Superlegierung auf Nickelbasis beschrieben, wobei der Riß an der Oberfläche einer Öffnung im Bereich von etwa 0,025 mm bis etwa 2,5 mm hat. Bei dem Verfahren wird der Gegenstand, welcher ein komplexes Oxid aus Aluminium oder Titan an seiner Oberfläche aufweist, der Einwirkung von gasförmigen aktiven Fluoridionen bei einer Temperatur von unter 1095 °C ausgesetzt. Sowohl auf die den Riß umgebende Oberfläche des Gegenstandes als auch in den Riß wird eine pulverförmige Reparaturlegierung eingebracht, die unter Vakuum zum Schmelzen gebracht wird. Als Nickelbasis-Superlegierung wird beispielsweise die in der US-PS 3,615,376 beschriebene Legierung René 80 und als Reparatur-Legierung die in der US-PS 3,759,692 beschriebene Legierung D-15 mit einer Zusammensetzung in Gewichtsprozent von 16 % Cr, 10 % Co, 3 % Al, 3 % Ta, 2.5 % B und einem Rest aus Nickel verwendet. Aufgrund der komplexen Geometrie eines Risses in einer Turbinenschaufel birgt eine Anwendung des Verfahrens die Möglichkeit, daß ein vollständiges Verfüllen des Risses nicht erreichbar ist und darüber hinaus insbesondere Rißspitzen mit hoher Spannungskonzentration bestehen bleiben, die als Ausgangspunkt der Entstehung eines neuen Risses dienen könnten.

In der DE 44 11 680 C1 ist ein Verfahren zur Reparatur von Fehlstellen in Bauteiloberflächen von einem Heißgas ausgesetzten Treibwerksteilen, wie Gasturbinenschaufeln, mit einer Heißgaskorrosionsschicht beschrieben. Hierbei wird in die Heißgaskorrosionsschicht und ggf. in das unmittelbar darunter liegende Grundmaterial eine kugelförmige Vertiefung geringer Tiefe und großem Sehnenradius eingebracht. In diese Vertiefung wird ein paßgenauer kugelförmiger Körper aus dem Material der Heißgaskorrosionsschicht eingebracht, der mit dem Triebwerksbauteil aneinandergefügt wird. Das Verfahren erlaubt neben einer Beseitigung von Fehlstellen in der Heißgaskorrosionsschicht auch das Ausräumen von Gußporen im Grundmaterial in unmittelbarer Umgebung der Heißgaskorrosionsschicht.

In der EP 0 491 189 A1 ist die Herstellung eines großen Gußbauteils aus einer schwer zu gießenden Superlegierung, wie einer Nickelbasis-Superlegierung angegeben. Als schwer zu gießende Legierungen werden solche Legierungen bezeichnet bei deren Guß an der Oberfläche oder unmittelbar unterhalb der Oberfläche sehr häufig schwerwiegende Defekte auftreten. Gemäß der EP 0 491 189 A1 werden bei einem großen Gußstück solche Defekte identifiziert und entfernt. In die dadurch entstehende Vertiefung wird ein geschmolzener Werkstoff, der insbesondere im wesentlichen die gleiche Zusammensetzung wie die Superlegierung hat, eingebracht. Durch das dadurch erzielte Verschweißen wird die Vertiefung vollständig geschlossen. Defekte in dem in die Vertiefung eingebrachten Werkstoff werden ebenfalls beseitigt.

Aufgabe der Erfindung ist es, ein Verfahren zur Beseitigung eines Risses in einem metallischen Bauteil anzugeben.

Die auf ein Verfahren zur Rißbeseitigung bei einem metallischen Bauteil, welches einen Riß aufweist, gerichtete Aufgabe, wird dadurch gelöst, daß in dem Bauteil eine den Riß entfernende Nut mit zumindest einem länglichen Nutsegment erzeugt, und mindestens ein der Form der Nut angepaßter Füllkörper in die Nut eingebracht und mit dem Bauteil fest verbunden wird.

Hierdurch wird gewährleistet, daß ein Riß in einem metallischen Bauteil nicht mit einem kleinen Füllgrad nur in einem oberflächennahen Bereich geschlossen wird, sondern eine vollständige Entfernung des Risses und eine Wiederauffüllung einer den Riß entfernenden Nut gewährleistet ist. Somit wird die Gefahr einer Rißausbreitung vermieden. Ein weiterer Einsatz des metallischen Bauteils, insbesondere einer Turbinen oder Verdichterschaufel, auch unter thermomechanischen sowie dynamischen Beanspruchungen ist hierdurch erreicht. Aufgrund der der Nut angepaßten Form des Füllkörpers, beispielsweise durch jeweils glatte aneinandergrenzende Oberflächen der Nut und des Füllkörpers, ist zudem ein hoher Füllgrad erreicht. Auch kann bei Durchführung des Verfahrens von einer aufwendigen Reinigung des Risses mittels Fluorid abgesehen werden, was bei bekannten Verfahren zur Entfernung von komplexen Aluminium oder Titan aufweisenden Oxiden erforderlich ist. Die Nut ist vorzugsweise stetig und monoton gekrümmt, so daß weitgehend keine Kanten und Ecken entstehen, welche zu unerwünschten Spannungskonzentrationen führen könnten. Das Verfahren eignet sich darüber hinaus auch zur Beseitiung eines Risses, der das Bauteil, insbesondere eine dünne Abströmkante einer Turbinenschaufel, durchdringt.

Das Ende des Risses, die sogenannte Rißspitze, wird vorzugsweise vollständig ausgenommen mit einem Radius, der einen Abbau der Spannungskonzentration an der Rißspitze vollständig gewährleistet. Die Nut ist hierzu in einem die Rißspitze umfassenden Endbereich verbreitert, insbesondere schalenartig, ausgebildet. Darüberhinaus kann bei Erzeugung der Nut durch mehrere Nutsegmente jedes Nutsegment einen verbreiterten Endbereich aufweisen. Hierdurch ist ein der Nutform angepaßter Füllkörper gegen Herausfallen gesichert. Bei einem beanspruchungsbedingten erneuten Auftreten eines Risses wird durch den nunmehr vorhandenen Füllkörper mit verbreitertem Endbereich zusätzlich die Rißausbreitung erschwert. Ein neuer Riß wird gezwungen, die Ebene, die senkrecht zur Belastungsrichtung liegt, zu verlassen, wodurch die Rißausbreitung verlangsamt wird.

Vorzugsweise wird der Füllkörper mit dem Bauteil durch ein Lot verlötet, so daß eine vollständige Befüllung der Nut erreicht wird. Das Lot ist vorzugsweise dem Bauteil metallurgisch ähnlich, insbesondere weitgehend mit diesem identisch. Hierdurch ist eine thermomechanisch besonders stabile Verbindung zwischen Füllkörper und Bauteil gewährleistet, und auch die thermomechanischen Eigenschaften des so reparierten Bauteils bleiben nahezu unverändert.

Diese Eigenschaften werden auch durch Verwendung eines Füllkörpers, der dem Bauteil metallurgisch ähnlich, insbesondere metallurgisch gleich ist, weitgehend nicht beeinflußt. Das Bauteil entspricht somit weitgehend einem neuen Bauteil. Thermische Nachbehandlungen und Weiterbehandlungen, insbesondere Beschichtungen, können am reparierten Bauteil durchgeführt werden. Aufgrund der bestimmbaren thermomechanischen Eigenschaften des mit dem Verfahren reparierten Bauteils kann es quasi als neuwertiges Bauteil verwendet werden.

Vorzugsweise wird die Nut aus einem geraden Nutsegment oder, insbesondere zur Beseitugung eines gekrümmten Risses, aus mindestens zwei geraden Nutsegmenten polygonförmig erzeugt. Eine Nut mit einem geraden Nutsegment oder einer Mehrzahl polygonförmig aneinandergeordneter Nutsegmente ist besonders einfach herstellbar und der Form des Risses leicht anpaßbar. Zur Herstellung solcher geraden oder polygonartigen Nuten eignen sich beispielsweise Vorrichtungen zum Fräsen und Erodieren.

Der Füllkörper ist vorzugsweise stabförmig ausgebildet und eignet sich somit besonders zum Ausfüllen gerade verlaufender Nuten oder gerade verlaufender Nutsegmente. Ein solcher Füllkörper ist einfach, beispielsweise durch Gießen, herstellbar. Ein stabförmiger Füllkörper läßt sich zudem auch einfach aus dem Material des Bauteils herstellen.

Die Nut wird vorzugsweise mit einer Elektrode aus dem Bauteil heraus erodiert. Als Elektrodenmaterial eignet sich vorzugsweise Kupfer. Die Elektrode ist als schmaler Stab mit einer Dicke von zwischen 2 mm und 10 mm, insbesondere 5 mm, ausgeführt. Ein stabförmiger Füllkörper hat vorzugsweise den gleiche Dicke wie die Elektrode, so daß lediglich eine geringfügige Spaltbreite zwischen Füllkörper und Bauteil in der Nut verbleibt. Diese Spaltbreite kann vollständig mit einem entsprechenden Lot ausgefüllt werden. In dem Bauteil verbleiben somit keine ungewollten Hohlräume, welche die mechanischen Eigenschaften des Bauteils beeinflussen könnten.

Der Füllkörper wird vorzugsweise der Oberfläche des Bauteils angepaßt, insbesondere glattgeschliffen. Hierdurch läßt sich ein Beschichten des Bauteils mit einer Schutzschicht leicht durchführen, wobei durch die metallurgische Ähnlichkeit von Bauteil, Lot und Füllkörper auch eine gute und gleichmäßige Haftung der Beschichtung erreicht wird.

Das Verfahren eignet sich besonders für Verdichter- oder Turbinenschaufeln, beispielsweise einer Gasturbine oder einer Dampfturbine. Bei einer Turbinenschaufel, insbesondere einer Leitschaufel einer Gasturbine, welche eine Anströmkante für Heißgas sowie eine Abströmkante aufweist, tritt ein Riß hauptsächlich im Bereich der Abströmkante auf, welche gegenüber der Anströmkante des Heißgases eine geringere Dicke aufweist und somit erhöhten thermomechanischen und dynamischen Belastungen ausgesetzt ist. Mit dem Verfahren läßt sich ein solcher, häufig in Richtung von der Anströmkante zur Abströmkante verlaufender Riß vollständig beseitigen und die Gasturbinenschaufel mit einer einheitlichen Schutzschicht zum Schutz gegen Korrosion und Temperaturbeanspruchungen überziehen. Ein Riß kann sich, insbesondere im Bereich der Abströmkante durch die Turbinenschaufel hindurch erstrecken, so daß durch das Verfahren lokal die Abströmkante erneuert wird.

Eine Leitschaufel einer Gasturbine kann hierbei einen Grundwerkstoff aus einer Nickelbasis-Superlegierung aufweisen. Geeignete Nickelbasis-Superlegierungen sind beispielsweise die Legierungen In 738LC, Udimed 500, In 939 sowie artverwandte Legierungen. Die Legierung In 738LC weist eine Zusammensetzung (Angaben in Gewichtsprozent) von 0.1 % C, 16.0 % Cr, 8.5 % Co, 1.75 % Mo, 2.6 % W, 0.9 % Nb, 3.4 % Ti, 3.4 % Al, 1.75 % Ta sowie einem Rest aus Nickel auf. Die Legierung Udimed 500 hat eine Zusammensetzung von (Angaben in Gewichtsprozent) 0.08 % C, 19.0 % Cr, 18.0 % Co, 4.0 % Mo, 2.9 % Ti, 2.9 % Al, max. 4.0 % Fe, 0.06 % B, 0.05 % Zr und einem Rest aus Nickel. Die Legierung In 939 hat eine Zusammensetzung (Angaben in Gewichtsprozent) von 22.5 % Cr, 19.0 % Co, 2.0 % W, 1.0 % Nb, 3.7 % Ti, 1.9 % Al, 1.4 % Ta und einem Rest aus Nickel.

Als Schutzschicht eignet sich vorzugsweise eine der unter dem Sammelbegriff MCrAlY bekannten Legierungen. Eine solche Legierung kann zwischen 15 Gew.-% und 35 Gew.-% Chrom, 7 Gew.-% bis 18 Gew.-% Aluminium, 1 Gew.-% bis 20 Gew.-% Rhenium, 0,3 Gew.-% bis 2 Gew.-% Yttrium und/oder ein äquivalentes Metall aus der Gruppe umfassen Scandium und die Elemente der Seltenen Erden sowie einem Rest aus Kobald und/oder Nickel aufweisen. Zusätzlich können Elemente wie Silizium, Hafnium, Tantal, Zirkon, Wolfram, Mangan, Niob im Bereich bis zu einigen Gew.-% enthalten sein. Eine solche Schutzschicht hat einen hohen Haftgrad sowohl auf dem Bauteil als auch dem Füllkörper und wird vorzugsweise mittels thermischem Spritzen oder "Physical Vapour Deposition (PVD)" aufgebracht.

Eine Turbinenschaufel, welche eine Nut aufweist, die mit einem Füllkörper ausgefüllt ist, der mit dem Grundkörper festverbunden und diesem metallurgisch ähnlich ist, weist nahezu dieselben thermomechanischen Eigenschaften wie eine einheitlich aus dem Grundkörper hergestellte Turbinenschaufel auf. Der Füllkörper ist vorzugsweise mit einem dem Grundkörper metallurgisch ähnlichen Lot mit dem Grundkörper verlötet. Der Grundkörper bildet mit dem Füllkörper vorzugsweise eine glatte Oberfläche, auf der eine Schutzschicht auch bei hohen Belastungen sicher haftet.

Anhand der in der Zeichnung dargestellten Ausführungsbeispiele werden das Verfahren zur Rißbeseitigung sowie eine Leitschaufel einer Gasturbinenanlage näher erläutert. Es zeigen:
- FIG 1: in einer räumlichen Darstellung eine Turbinenschaufel sowie eine Vorrichtung zur Erodierung einer Nut,
- FIG 2: einen Ausschnitt einer Draufsicht auf eine Turbinenschaufel mit zwei Nuten sowie
- FIG 3 und FIG 4: einen Ausschnitt eines Querschnittes einer Turbinenschaufel.

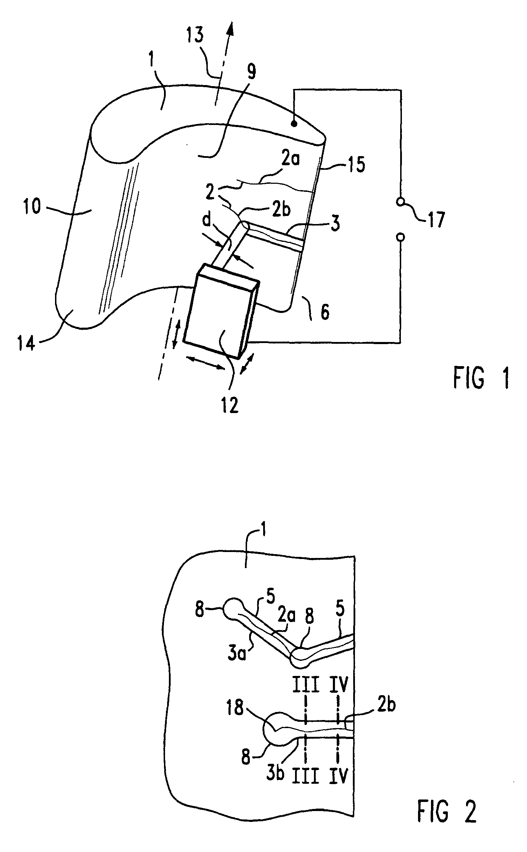

Identische Bezugszeichen der FIG 1, 2, 3 und 4 haben jeweils identische Bedeutung.

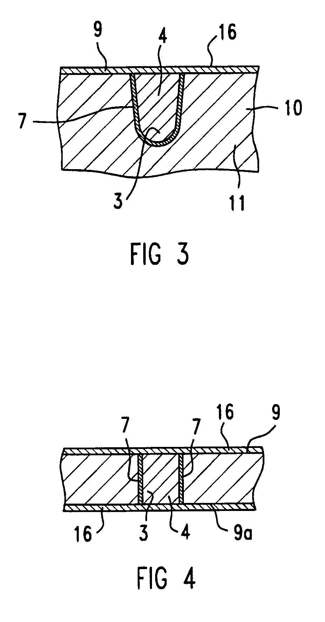

In FIG 1 ist in einer räumlichen Darstellung eine sich entlang einer Hauptachse 13 erstreckende Leitschaufel 10 einer nicht dargestellten Gasturbine in einem Ausschnitt dargestellt. Die Leitschaufel 10 weist eine abgerundete Anströmkante 14 für umzulenkendes Heißgas sowie eine in Bezug auf die Hauptachse 13 der Anströmkante 14 gegenüberliegende Abströmkante 15 mit deutlich geringerer Dicke auf. Im Bereich der Abströmkante 15 sind schematisch und nicht maßstäblich beispielhaft zwei Risse 2 dargestellt, die im wesentlichen in einer Ebene senkrecht zur Hauptachse 13 an der Oberfläche 9 der Leitschaufel 10 verlaufen und eine Länge von ca. 10 mm bis 50 mm, insbesondere 20 mm, aufweisen können. Ein Riß 2 kann gegebenenfalls auch die Leitschaufel 10 im Bereich der Abströmkante 15 vollständig durchdrinen (vgl. FIG 4). Weiterhin ist in FIG 1 eine Vorrichtung 12 zur Erodierung einer Nut 3 vorgebbarer Tiefe und Breite in die Leitschaufel 10 schematisch und nicht maßstäblich dargestellt. Die Vorrichtung 12 weist neben einer Spannungsquelle 17 eine Elektrode 6 mit einer Dicke d von etwa 5 mm auf. Mit der Elektrode 6 wird aus der Leitschaufel 10 eine einen Riß 2 entfernende Nut 3 herauserodiert. Die Nut 3 weist zumindest ein längliches, insbesondere gerades, Nutsegment 5 auf.

In FIG 2 sind zur näheren Veranschaulichung beispielhaft zwei Nuten 3a, 3b mit unterschiedlicher Form in einem Bauteil 1, insbesondere einer Leitschaufel 10 einer Gasturbine, dargestellt. Zur Verdeutlichung ist jeweils schematisch ein durch die jeweilige Nut 3a, 3b entfernter Riß 2a, 2b des Bauteils 1 gezeigt. Die Nut 3b verläuft in dem Bauteil 1 gerade und hat in einem Endbereich 8 in der dargestellten Draufsicht eine kreisförmige Kontur. Durch die kreisförmige Ausgestaltung des Endbereiches 8 wird das Ende 18 des Risses 2b vollständig durch einen näherungsweise halbkugelförmigen Bereich der Nut 3b entfernt. Dies ist besonders vorteilhaft, da am Ende 18 des Risses 2b eine Rißspannungssingularität vorliegt, die schon im elastischen Bereich umgekehrt proportional des Abstandes R³ von dem Ende 18 des Risses 2b anwächst und somit zu einer weiteren Schädigung der Leitschaufel 10 führen könnte. Der schematisch dargestellte Riß 2a ist durch zwei gerade Nutsegmente 5 mit einem jeweiligen verbreiterten Endbereich 8 unterschiedlicher Orientierung entfernt worden. Die Verwendung gerader Nutsegmente 5 hat den Vorteil, daß eine polygonartige Nut 3a entsteht, wobei die Nutsegmente 5 jeweils einfach mit einem stabförmigen Füllkörper 4 verschließbar sind. Die geraden Nutsegmente 5 sowie die einzufügenden Füllkörper 4 können jeweils eine Länge von etwa 10 mm bis 20 mm besitzen. Ein in jedes Nutsegment 5 eingebrachter Füllkörper 4 ist durch den verbreiteretn Endbereich 8 gegen ein Herausfallen gesichert. Zudem ist eine polygonartige Nut 3a durch entsprechende Vorrichtungen zur Herstellung von Nuten 3, beispielsweise einer numerisch gesteuerten Fräsmaschine oder einer Erodierungsvorrichtung 12, einfach herstellbar. Dies gilt ebenfalls für die die Nut 5 ausfüllenden Füllkörper 4, die eine einfache nämlich eine gerade Form aufweisen und Grußstücke sein können.

FIG 3 zeigt einen Querschnitt durch eine Nut 3 einer Leitschaufel 10 einer Gasturbine. Die Nut 3 ist in einem Grundkörper 11 der Leitschaufel 10 eingebracht. Sie ist mit einem Füllkörper 4 gefüllt, der annähernd dieselbe Querschnittsform wie die Nut 3 hat und aus demselben Material wie der Grundkörper 11 besteht. Füllkörper 4 und Grundkörper 11 sind durch ein Lot 7 fest verbunden. Das Lot 7 ist dem Grundwerkstoff 11 metallurgisch ähnlich, so daß eine dauerhafte und thermomechanisch hoch belastbare Verbindung zwischen Füllkörper 4 und Grundkörper 11 hergestellt ist. Füllkörper 4 und Grundkörper 11 bilden eine einheitliche Oberfläche 9 der Leitschaufel 10. Auf diese Oberfläche 9 ist eine Schutzschicht 16, die insbesondere dem thermischen und korrossiven Schutz der Leitschaufel 10 dient, aufgebracht. Analog zu FIG 3 zeigt FIG 4 eine Nut 3, die die Leitschaufuel 10 im Bereich der dünnen Abströmkante 15 durchdringt und mit einem Füllkörper 4 wieder vollständig verschlossen ist. Beiderseits des Füllkörpers 4 ist eine jeweilige Oberfläche 9, 9a mit einer jeweiligen Schutzschicht 16 überzogen.

Die Erfindung zeichnet sich durch ein Verfahren zur Beseitigung eines Risses in einem metallischen Bauteil, insbesondere einer Turbinenschaufel, wie einer Leitschaufel einer Gasturbinenanlage, aus, bei dem nicht nur in einem Oberflächen nahen Bereich eine Verfüllung des Risses erfolgt, sondern der Riß durch eine Nut vollständig entfernt wird. Das Verfahren ist auch bei einem Riß anwendbar, der das Bauteil vollständig durchdringt, insbesondere im Bereich einer dünnen Abströmkante einer Turbinenschaufel. Die Nut wird vorzugsweise aus einem Nutsegment oder mehreren polygonartig sich aneinanderfügenden geraden Nutsegmenten mit einem verbreiterten Endberich hergestellt und durch einen bzw. mehrere stabförmige Füllkörper ausgefüllt. Jeder Füllkörper ist vorzugsweise mit dem Bauteil metallurgisch identisch und wird mit einem dem Bauteil metallurgisch ähnlichen Lot mit diesem fest und dauerhaft thermomechanisch belastbar verbunden. Durch eine vollständige Entfernung des Risses und einer Wiederverschließung einer hierzu erzeugten Nut mit einem metallurgisch ähnlichen oder identischen Werkstoff, wird sowohl die Gefahr eines Fortschreitens des Risses sowie die Problematik erhöhter Rißspannungen sicher vermieden. Das Bauteil, welches vorzugsweise eine Leitschaufel einer Gasturbine ist, wird bevorzugtermaßen mit einer Schutzschicht gegen Korrosion und/oder Oxidation und Einwirkung hoher Temperaturen überzogen. Durch die metallurgische Ähnlichkeit des Bauteils, des Füllkörpers und des Lotes ergeben sich auch keine Probleme hinsichtlich der Haftung und der Beständigkeit der Schutzschicht. Mit dem Verfahren ist es somit möglich, eine einen Riß aufweisende Leitschaufel oder Laufschaufel einer Gasturbine oder Dampfturbine auf einfache Art und Weise unter Wahrung der thermomechanischen Eigenschaften zu reparieren.

## Patentansprüche

1. Verfahren zur Rißbeseitigung bei einem metallischen Bauteil (1), welches einen Riß (2) aufweist, wobei in dem Bauteil (1) eine den Riß (2) entfernende Nut (3), welche zumindest ein längliches Nutsegment (5) aufweist, erzeugt wird, und mindestens ein der Form der Nut (3) angepaßter Füllkörper (4) in die Nut (3) eingebracht und mit dem Bauteil (1) festverbunden wird.

2. Verfahren nach Anspruch 1, bei dem das längliche Nutsegment (5) mit einem verbreiterten, insbesondere schalenartigen, Endbereich (8) ausgeführt wird.

3. Verfahren nach Anspruch 1 oder 2, bei dem der Füllkörper (4) mit dem Bauteil (1) durch ein Lot (7) verlötet wird.

4. Verfahren nach Anspruch 3, wobei das Lot (7) dem Bauteil (1) metallurgisch ähnlich ist.

5. Verfahren nach einem der vorhergehenden Ansprüche, bei dem der Füllkörper (4) dem Bauteil (1) metallurgisch ähnlich, insbesondere gleich, ist.

6. Verfahren nach einem der vorhergehenden Ansprüche, bei dem die Nut (3) insbesondere zur Beseitigung eines gekrümmten Risses (2) aus mindestens zwei länglichen Nutsegmenten (5) polygonförmig erzeugt wird.

7. Verfahren nach einem der vorhergehenden Ansprüche, bei dem ein stabförmiger Füllkörper (4), insbesondere mit einem verbreiteretn Endbereich (8), verwendet wird.

8. Verfahren nach einem der vorhergehenden Ansprüche, bei dem die Nut (3) mit einer Elektrode (6) aus dem Bauteil (1) heraus erodiert wird.

9. Verfahren nach Anspruch 7, mit einer stabförmig ausgebildeten Elektrode (6), die eine Dicke (d) von 2 mm bis 10 mm, insbesondere 5 mm, hat.

10. Verfahren nach einem der vorhergehenden Ansprüche, bei dem der Füllkörper (4) der Oberfläche (9) des Bauteils (1) angepaßt, insbesondere glattgeschliffen, wird.

11. Verfahren nach einem der vorhergehenden Ansprüche, welches bei einer Turbinenschaufel (10), insbesondere einer Leitschaufel (10) einer Gasturbine, angewandt wird.

## Claims

1. Method of repairing cracks in a metallic component (1) which has a crack (2), wherein a groove (3) which removes the crack (2) and has at least one elongate groove segment (5) is produced in the component (1), and at least one filling body (4) adapted to the shape of the groove (3) is introduced into the said groove (3) and firmly bonded to the component (1).

2. Method according to claim 1, in which the elongate groove segment (5) is constructed with a widened, in particular dish-like end region (8).

3. Method according to claim 1 or 2, in which the filling body (4) is soldered to the component (1) by means of a solder (7).

4. Method according to claim 3, wherein the solder (7) is metallurgically similar to the component (1).

5. Method according to one of the preceding claims, in which the filling body (4) is metallurgically similar, in particular identical, to the component (1).

6. Method according to one of the preceding claims, in which the groove (3) is produced polygonally from at least two elongate groove segments (5), particularly for the purpose of eliminating a curved crack (2).

7. Method according to one of the preceding claims, in which use is made of a bar-shaped filling body (4), particularly with a widened end region (8).

8. Method according to one of the preceding claims, in which the groove (3) is eroded out of the component (1) with the aid of an electrode (6).

9. Method according to claim 7, with an electrode (6) of bar-shaped construction which has a thickness (d) of 2 mm to 10 mm, in particular 5 mm.

10. Method according to one of the preceding claims, in which the filling body (4) is adapted to the surface (9) of the component (1), in particular is ground smooth.

11. Method according to one of the preceding claims, which is employed in the case of a turbine blade (10), in particular a guide blade (10) of a gas turbine.

## Revendications

1. Procédé d'élimination de fissures dans un élément (1) métallique, qui comporte une fissure (2), en pratiquant dans l'élément (1) une gorge (3) éliminant la fissure et comportant au moins un segment (5) longitudinal de gorge, en introduisant dans la gorge (3) au moins une pièce (4) de remplissage adaptée à la forme de la gorge (3) et en la reliant solidement à l'élément (1).

2. Procédé suivant la revendication 1, dans lequel le segment (5) longitudinal de gorge a une région (8) d'extrémité élargie, notamment en forme de cuvette.

3. Procédé suivant la revendication 1 ou 2, dans lequel la pièce (4) de remplissage est brasée à l'élément (1) par une brasure (7).

4. Procédé suivant la revendication 3, dans lequel la brasure (7) est métallurgiquement semblable à l'élément (1).

5. Procédé suivant l'une des revendications précédentes, dans lequel la pièce (4) de remplissage est métallurgiquement semblable, notamment identique, à l'élément (1).

6. Procédé suivant l'une des revendications précédentes, dans lequel la gorge (3) est, notamment pour éliminer une fissure (2) incurvée, de forme polygonale en étant constituée d'au moins deux segments (5) longitudinaux de gorge.

7. Procédé suivant l'une des revendications précédentes, dans lequel on utilise une pièce (4) de remplissage en forme de barreau ayant notamment une région (8) d'extrémité élargie.

8. Procédé suivant l'une des revendications précédentes, dans lequel la gorge (3) est érodée dans l'élément (1) par une électrode (6).

9. Procédé suivant la revendication 7, comprenant une électrode (6) en forme de barreau d'une épaisseur (d) de 2 mm à 10 mm, notamment de 5 mm.

10. Procédé suivant l'une des revendications précédentes, dans lequel la pièce (4) de remplissage est adaptée à la surface (9) de l'élément (1) et notamment est polie de manière à être lisse.

11. Procédé suivant l'une des revendications précédentes, qui est utilisé dans une aube (10) de turbine, notamment une aube (10) directrice d'une turbine à gaz.
